# EUROPEAN PATENT SPECIFICATION

(11) **EP 0 974 269 B1**
(45) Date of publication and mention of the grant of the patent: **22.09.2004**
(21) Application number: 98901575.5
(22) Date of filing: 10.02.1998
(51) Int. Cl.: A23C 9/13, A23L 1/304

(54) **FERMENTED MILKS ENRICHED WITH IRON AND PROCESSES FOR PRODUCING THE SAME**
MIT EISEN ANGEREICHERTE SAUERMILCHPRODUKTE SOWIE VERFAHREN ZUR HERSTELLUNG DERSELBEN
LAITS FERMENTES ENRICHIS AVEC DU FER ET LEURS PROCEDES DE PRODUCTION

(30) Priority: 14.02.1997 JP 4495097
(43) Date of publication of application: 26.01.2000
(73) Proprietor: Kabushiki Kaisha Yakult Honsha, Minato-ku, Tokyo 105-0021 (JP)
(72) Inventor: AKAHOSHI, Ryoichi Kabushiki Kaisha Yakult Honsha, Tokyo 105-0021 (JP); MATSUI, Akihisa Kabushiki Kaisha Yakult Honsha, Tokyo 105-0021 (JP); MITA, Kaori Kabushiki Kaisha Yakult Honsha, Tokyo 105-0021 (JP); ISHIDA, Miho Kabushiki Kaisha Yakult Honsha, Tokyo 105-0021 (JP); NAKATA, Katsuyasu, Yokkaichi-shi, Mie-ken 510-0829 (JP)
(74) Representative: Wächtershäuser, Günter, Prof. Dr.
(86) International application number: PCT/JP1998/000543
(87) International publication number: WO 1998/035565

(56) References cited:
- JP-A- 3 127 957
- JP-A- 6 245 698
- JP-A- 61 025 458
- JP-A- 62 179 341
- JP-B- 46 034 743

## Description

### Technical Field

This invention relates to fermented milks which are enriched with iron well dispersed without unpleasant flavor or taste of iron, and also to a process for producing the same.

### Background Art

Fermented milks such as yogurt, yogurt drinks and fermented milk drinks have been extensively consumed for many years as they are good for health. In recent years, attempts have been made to enrich these fermented milks further with nutrients with a view to increasing their attractiveness as commercial products, resulting in the production of fermented milks, such as yogurt, enriched with vitamins, minerals, dietary fiber and/or the like, for example.

JP-A-3 127 957 discloses a sour milk food preparation containing high amounts of protein, calcium and iron.

However, many of such enriching nutrients lower the flavor or taste of fermented milks, thereby making it impossible to add them to extents which would otherwise be desired for enrichment.

Among these, there is a strong desire for the addition of iron. Nonetheless, there is an unavoidable limitation imposed on the amount of iron which can be added, because, especially when added to a fermented milk which is acidic, characteristic unpleasant flavor or taste like that to be felt when one touches iron rust at his or her tongue is produced.

Conventionally an upper limit of iron, which is permissible from the standpoint of flavor or taste, has been considered to be 1 mg per 100 g of a fermented milk such as yogurt. Addition of iron beyond this upper limit has been conducted only to limited extents, for example, at the cost of some flavor or taste, by adding an ingredient having strong flavor such as chocolate, or by adding prune, which is known for its high iron content, or the like to yogurt.

As food additives for the enrichment of iron, ferric chloride, iron citrate, ammonium iron citrate, sodium ferrous citrate, iron lactate, ferrous pyrophosphate and ferric pyrophosphate are known in general. They all have characteristic unpleasant flavor or taste, so that limitations have been imposed on their contents. Further, ferrous pyrophosphate and ferric pyrophosphate are not soluble and are hence caused to precipitate in the pH range of general foods, and are thus accompanied by a problem that they are not usable for such foods.

Under the foregoing circumstances, there is a long standing demand for the provision of fermented milks, such as yogurt, which are added with more iron than conventional fermented milks without lowering their flavor or taste. It is an object of the present invention to meet this demand.

### Disclosure of the Invention

The present inventors have proceeded with extensive research to meet the above-described demand. As a result, it has been found that an emulsifier-coated ferric pyrophosphate composition, which is ferric pyrophosphate coated with a particular emulsifier, remains in a state stably suspended in an acidified milk obtained by lactic acid fermentation and also that its addition to a fermented milk such as yogurt makes it possible to enrich iron with ease.

It has also been found that, although vitamin C is not considered to stably exist together with iron, use of the above-described emulsifier-coated ferric pyrophosphate composition permits stable addition of vitamin C to a certain specific extent, thereby making it possible to obtain a fermented milk enriched with both vitamin C and iron.

Therefore, the present invention provides a fermented milk enriched with iron, which comprises an acidified milk obtained by lactic acid fermentation and an emulsifier-coated ferric pyrophosphate composition added therein, and also a process for producing the same.

In addition, the present invention also provides a fermented milk enriched with vitamin C and iron, which have been obtained by adding an emulsifier-coated ferric pyrophosphate composition and vitamin C such that the following formula is satisfied:
XY ≤ 50
wherein
X: the content (mg) of iron in the emulsifier-coated ferric pyrophosphate composition per 100 g of the product, and
Y: the content (mg) of vitamin C per 100 g of the product;
and also a process for producing the same.

### Brief Description of the Drawing

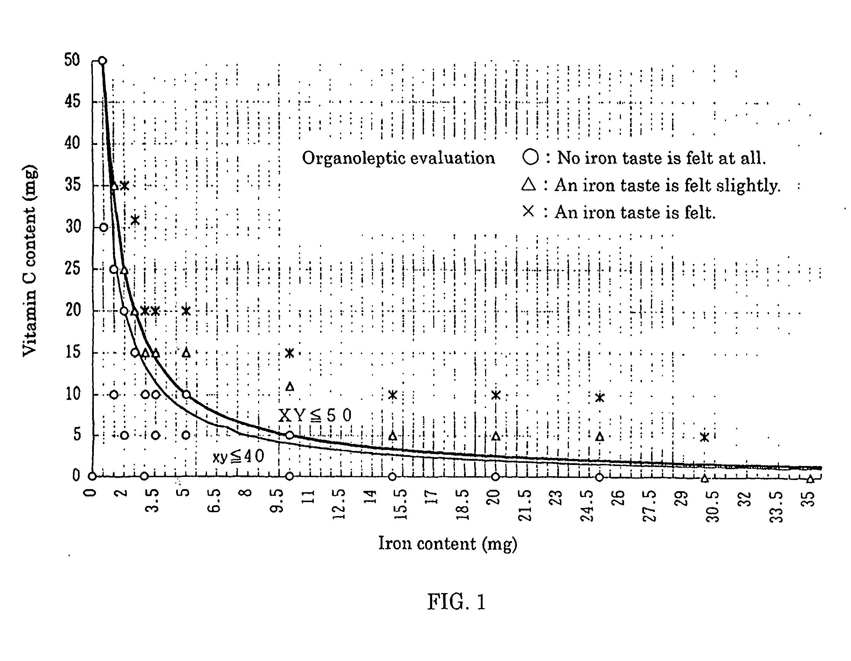

FIG. 1 is a diagram showing the results of a flavor evaluation of invention products added with vitamin C.

### Best Modes for Carrying Out the Invention

The emulsifier-coated ferric pyrophosphate composition (hereinafter called the "coated ferric pyrophosphate"), which is used for the enrichment of iron in the present invention, is novel and may be prepared, for example, by one of processes to be described hereinafter. Specifically, it can be obtained by subjecting an aqueous solution of ferric chloride and an aqueous solution of tetrasodium pyrophosphate to neutralization and salt formation in the presence of a food emulsifier or subjecting an aqueous solution of ferric chloride and an aqueous solution of tetrasodium pyrophosphate to a neutralization reaction and coating the reaction product with a food emulsifier, and then collecting a solid part by solid-liquid separation such as centrifugal separation or membrane separation.

No particular limitation is imposed on the food emulsifier which is employed for the preparation of the coated ferric pyrophosphate. General food emulsifiers, for example, sugar fatty acid esters, glycerin fatty acid esters, propylene glycol fatty acid esters, sorbitan fatty acid esters and the like can be used either singly or in combination. Among these, use of an enzymatically-hydrolyzed lecithin, a polar lipid having high coating effect, is desired.

This enzymatically-hydrolyzed lecithin is composed of one or more substances selected from the group consisting of monoacylglycerophospholipids, which are available by subjecting plant lecithin or yolk lecithin to limited hydrolysis at fatty acid ester moieties thereof with phospholipase A and which center around lysophosphatidylcholine, lisophosphatidylethanolamine, lisophosphatidylinositol and lisophosphatidylserine; and phosphatidyl acid, lysophosphatidic acid, phosphatidylglycerol and lisophosphatidylglycerol, which are formed using phospholipase D. Preferred examples can include lisophosphatidylcholine, lisophosphatidylethanolamine and lisophosphatidylserine, with lisophosphatidylcholine being more preferred.

As the phospholipase for use in the enzymatic hydrolysis to produce the enzymatically-hydrolyzed lecithin, any phospholipase can be used insofar as it has phospholipase A and/or D activity, irrespective of its origin, namely, no matter whether it is originated from an animal such as pig pancreas, from a plant such as cabbage, or from a microorganism such as a fungus.

Use of the above-exemplified enzymatically-hydrolyzed lecithins as food emulsifiers is preferred, because these enzymatically-hydrolyzed lecithins all have surface activity, equally contain phosphoric groups in their hydrophilic groups, and have property that they have considerably strong adsorptive coating ability for surfaces of water-insoluble minerals than nonionic surfactants such as sugar fatty acid esters and glycerin fatty acid esters. For these reasons, stable adsorptive interphases are formed on surfaces of fine particles of such water-insoluble minerals and, even when heat treatment is applied, they can effectively inhibit secondary coagulation without separation. As a result, good dispersibility is obtained.

Upon preparation of the coated ferric pyrophosphate for use in the present invention, sufficient effects can be obtained from the single use of the enzymatically-hydrolyzed lecithin, but its combined use with one or more food emulsifiers - such as sugar fatty acid esters, glycerin fatty acid esters, propylene glycol fatty acid esters and sorbitan fatty acid esters - and/or one or more of other surfactants such as saponin compounds derived from quillaia and yucca foam has been observed to bring about a further improvement in dispersibility and is thus preferred.

The coated ferric pyrophosphate so obtained is used preferably by resuspending it in water. The particle size of this coated ferric pyrophosphate may desirably range from 0.05 µm to 2 µm. Use of a particle size greater than 2 µm may fail to achieve good dispersion.

The present invention is practiced by adding the above-described coated ferric pyrophosphate in an acidified milk which has been subjected to lactic acid fermentation. It is to be noted that the term "acidified milk subjected to lactic acid fermentation" as used herein indicates entire fermented milk products or the like, which are obtained by subjecting milk, milk products or the like to lactic acid fermentation.

Accordingly, any one of the above-exemplified acidified milks can be used irrespective of its kind as a raw material for the production of a fermented milk of the present invention. As preferred examples, however, an acidified milk (liquid material containing lactic acid bacteria) obtained as a so-called yogurt base by adding skim milk powder, sugar, a stabilizer and the like to whole milk or skim milk, subjecting the resultant mixture to pasteurization at 85°C for 30 seconds or so to homogenize the same, cooling the mixture to 40°C, adding a starter and then conducting lactic acid fermentation for 4 to 6 hours to pH 3.5 or so, an acidified milk obtained by adding whey proteins to whole milk or skim milk powder and then causing the resultant mixture to undergo lactic acid fermentation likewise, and an acidified milk obtained by causing soybean milk to undergo lactic acid fermentation likewise can be exemplified typically. Incidentally, the cell strain usable for the above-described lactic acid fermentation is not limited to a lactic acid bacterium but can also be a bifid bacterium, a yeast or the like, and further, they may be used in combination.

No particular limitation is imposed on the amount of the coated ferric pyrophosphate to be added to the acidified milk subjected to lactic acid fermentation, but from the standpoint of flavor or taste, it is desired to add the coated ferric pyrophosphate in an amount of from 1.0 to 25 mg, preferably from 1.0 to 20 mg or so in terms of iron per 100 g of the product.

To the iron-enriched fermented milk of the present invention, syrup can also be added as in the production of fermented milks such as plain yogurt, yogurt drinks and fermented milk drinks. The term "syrup" as used herein means commonly-employed sweetenings, nutrients, stabilizers, viscosity regulators and the like, and should not be limited specifically. Usable examples can include sugar, glucose, liquid fructose, aspartame, sugar alcohol, polydextrose, gelatin, pectin, and agar.

Further, addition of vitamin C to fermented milks, especially to bifid-bacterium-containing yogurt and the like is also desired from the standpoint of cell viability, beauty effects or the like.

It is also possible to add vitamin C in the present invention. Addition of vitamin C in a large amount, however, lowers the effect of the present invention for reducing the taste or flavor of iron. When one containing vitamin C, such as fluid juice, is used as a syrup, it is desired to add it in an appropriate amount. Described specifically, the amount of vitamin C in 100 g of a product may be in a range of from 5 to 50 mg and, as will be demonstrated in tests to be described subsequently herein, it is desired to add vitamin C such that the following formula is satisfied:
XY ≤ 50, especially XY ≤ 40
wherein
X: the content (mg) of iron in the emulsifier-coated ferric pyrophosphate composition per 100 g of the product, and
Y: the content (mg) of vitamin C per 100 g of the product.
Owing to these features, effect for inhibiting development of iron smell can also be obtained in fermented milks which contain vitamin C.

In the production of an iron-enriched fermented milk, such as yogurt, according to the present invention, the coated ferric pyrophosphate can be added at any stage during the conventional production process of the fermented milk when the fermented milk so produced does not contain vitamin C. For example, the emulsifier-coated ferric pyrophosphate composition may be added, subsequent to its sterilization, to an acidified milk obtained from lactic acid fermentation, and after addition of a pasteurized syrup as needed, homogenization may be conducted. As an alternative, a syrup which has been mixed with the emulsifier-coated ferric pyrophosphate composition and has been pasteurized beforehand may be added to a homogenized acidified milk.

When a fermented milk to be produced, such as yogurt, contains vitamin C inherently, it is desired to separately sterilize the coated ferric pyrophosphate and the vitamin-C-containing syrup and then to separately add them to an acidified milk already subjected to lactic acid fermentation. The term "to separately add" as used herein means that the coated ferric pyrophosphate and the vitamin-C-containing syrup are added at the same time or one after the other rather than adding them in a form mixed together in advance.

The present invention will next be described in further detail by describing Examples, Referential Examples and Tests. It should however be borne in mind that the present invention is by no means limited by or to these Examples.

### Referential Example 1

### Preparation of Coated Ferric Pyrophosphate

Ferric chloride (hexahydrate) (13 kg) and enzymatically-hydrolyzed lecithin ("SUNLECITHIN L"; product of TAIYO KAGAKU CO., LTD.) (0.3 kg) were dissolved in deionized water (60 kg) to prepare an iron solution. Into a pyrophosphoric acid solution obtained by dissolving tetrasodium pyrophosphate (decahydrate) (20 kg) in deionized water (500 kg), the iron solution was gradually added under stirring to adjust the pH of the resulting mixture to 3.0. After salt formation of ferric pyrophosphate through a neutralization reaction was completed, solid-liquid separation was conducted by centrifugal separation (3000 x g, 5 minutes), and a ferric pyrophosphate-enzymatically-hydrolyzed lecithin complex (coated ferric pyrophosphate) (8.2 kg in terms of dry weight) was collected as a solid phase. The complex was resuspended in deionized water, whereby a 10% slurry of the coated ferric pyrophosphate was prepared.

With respect to this coated ferric pyrophosphate, its water dispersibility and particle shape were compared. The water dispersibility was determined by adding commercial cow's milk (900 g) to the 10% slurry of the coated ferric pyrophosphate (100 g) to adjust the concentration of ferric pyrophosphate to 1% and then investigating sedimentation along the passage of time. On the other hand, the particle shape was measured by a laser diffraction particle size distribution analyzer ("HELOS"; manufactured by SYMPATEC CORP.)

As a result, it was found that even after an elapsed time of 500 hours, the coated ferric pyrophosphate prepared in Referential Example 1 did not develop any sedimentation and remained dispersed as extremely minute particles (0.01 µm to 0.3 µm) in water.

### Test 1

After 20% skim milk was pasteurized at 120°C for 3 seconds, it was inoculated with 1% of *St. thermophilus* and 1% of *L. bulgaricus* and was then incubated at 37°C to pH 4.3, whereby yogurt (430 g) was obtained. An aqueous solution, which had been obtained by dissolving sugar (70 g), pectin (3 g) and the coated ferric pyrophosphate obtained in the Referential Example (2.1 g; 50 mg in terms of iron) in water to give a total weight of 570 g, was pasteurized at 110°C for 3 seconds into a syrup.

The yogurt (430 g) and the syrup (570 g), both obtained as described above, were mixed together and subsequent to homogenization in a homogenizer (homogenizing pressure: 150 kg/cm²), were filled in containers as invention products (one added with yogurt flavor (1 g) and the other without yogurt flavor. As comparative products, yogurt produced in a similar manner except that iron citrate (0.3 g; 50 mg in terms of iron) was added in place of the coated ferric pyrophosphate was used.

After the invention products and the comparative products were stored at 10°C for 14 days, a flavor/taste evaluation was conducted by a panel of 10 experts. The results are shown in Table 1.

**Table 1**

| | Not added with flavor | Added with flavor |
|---|---|---|
| Coated ferric pyrophosphate | ○ | ○ |
| | No iron taste was felt at all. | No iron taste was felt at all. |
| Iron citrate | X | X |
| | Strong iron taste was felt. | No iron taste was felt in the beginning, but strong iron taste was then felt. |

### Test 2

After 20% skim milk was pasteurized at 120°C for 3 seconds, it was inoculated with 1% of *St. thermophilus* and 1% of *L. bulgaricus* and was then incubated at 37°C to pH 4.3, whereby yogurt (430 g) was obtained.

On the other hand, an aqueous solution which had been obtained by dissolving sugar (70 g), pectin (3 g) and a predetermined amount of the coated ferric pyrophosphate in water to give a total weight of 570 g was pasteurized at 110°C for 3 seconds into a first syrup, and an aqueous solution which had been obtained by dissolving sugar (70 g), pectin (3 g) and a predetermined amount of vitamin C in water to give a total weight of 570 g was pasteurized at 110°C for 3 seconds into a second syrup.

The syrups were mixed with the yogurt (430 g) such that the iron in the coated ferric pyrophosphate and vitamin C were contained in various proportions. The resulting mixture was homogenized in a homogenizer (homogenizing pressure: 150 kg/cm²), added with yogurt flavor (1 g), and then filled in a container. After yogurts obtained as described above were stored at 10°C for 14 days, a flavor/taste evaluation was conducted by a panel of 10 experts. The results are shown in FIG. 1.

As is evident from the results shown in FIG. 1, the iron from the coated ferric pyrophosphate and vitamin C are in such a relationship that vitamin C cannot be increased if the iron is increased and the iron cannot be increased if vitamin C is increased. Specifically, it has been found that yogurt from which no iron taste is felt at all can be obtained when the coated ferric pyrophosphate and vitamin C are added such that the following formula is satisfied:
XY ≤ 50, especially XY ≤ 40
wherein
X: the content (mg) of iron in the coated ferric pyrophosphate composition per 100 g of the product, and
Y: the content (mg) of vitamin C per 100 g of the product.

### Example 1

12% whole powder milk (500 g) was added with the coated ferric pyrophosphate obtained in Referential Example 1 (2.5 g) and, subsequent to pasteurization at 115°C for 3 seconds, was inoculated with 1% of *St. thermophilus* and 1% of *L. bulgaricus*. The resultant mixture was filled in cup containers and then incubated at 37°C to pH 4.2.

After completion of the incubation, they were cooled to 10°C or lower, stored at 10°C for 14 hours and then evaluated for flavor and taste. It was found that delicious plain yogurt completely free of iron taste was obtained.

### Example 2

After 25% skim milk was pasteurized at 120°C for 3 seconds, it was inoculated with 1% of *St. thermophilus* and was then incubated at 37°C to pH 4.2, whereby yogurt (250 g) was obtained. Further, 25% skim milk was added with 0.1% of yeast extract, pasteurized at 120°C for 3 seconds, inoculated with 1% of *B. brave*, and then incubated at 37°C to pH 4.4, whereby yogurt (120 g) was obtained.

As a syrup, on the other hand, water was added to sugar (70 g), pectin (3 g) and vitamin C (10 mg) to give a total weight of 500 g, and the resultant mixture was pasteurized at 110°C for 3 seconds. Likewise, water was added to the coated ferric pyrophosphate (1 g) to give a total weight of 130 g, followed by pasteurization at 100°C for 3 seconds.

The two types of yogurts, the syrup, the emulsifier-coated ferric pyrophosphate composition and a small amount of yogurt flavor were mixed to give 1,000 g, and subsequent to homogenization, the mixture was sealed and filled in a container, whereby drink yogurt added with the bifid bacterium was obtained. It was stored at 10°C for 14 days and was then evaluated for flavor and taste. It was found to be absolutely free of iron taste.

### Example 3

15% skim milk was added with 3% glucose, pasteurized at 120°C for 3 seconds, inoculated with 1% of *L. casei*, and then incubated at 37°C to pH 3.6, whereby yogurt (210 g) was obtained. On the other hand, the coated ferric pyrophosphate obtained in Referential Example 1 (4 g) was added to sugar (100 g) to give 790 g, followed by pasteurization at 110°C for 3 seconds to obtain a syrup.

The yogurt and syrup so obtained were mixed and subsequent to addition of a flavor, were homogenized (150 kg/cm²) and then filled in a container, whereby an iron-enriched fermented milk drink was obtained. Subsequent to storage at 10°C for 14 days, its flavor and taste were evaluated. Unpleasant iron flavor or taste was not felt at all.

### Capability of Exploitation in Industry

Owing to the use of the coated ferric pyrophosphate, the present invention has made it possible to enrich fermented milks, such as yogurt, yogurt drinks and fermented milk drinks, with iron although their enrichment with iron has heretofore been hardly practical due to the unpleasant flavor and taste of iron.

By the present invention, it is therefore possible (i) to easily produce yogurt enriched with iron in such a large amount as not feasible to date and (ii) to produce fermented milks, such as yogurt, which are free of any problem from the standpoint of flavor and taste despite their enrichment with iron.

## Claims

1. A fermented milk enriched with iron, comprising an acidified milk subjected to lactic acid fermentation and an emulsifier-coated ferric pyrophosphate composition added to said acidified milk.

2. The iron-enriched fermented milk according to claim 1, wherein said emulsifier-coated ferric pyrophosphate composition is added in an amount of from 1.0 to 25 mg in terms of iron per 100 g of the product.

3. The iron-enriched fermented milk according to claim 1 or 2, further comprising vitamin C added thereto.

4. A fermented milk enriched with iron, comprising an emulsifier-coated ferric pyrophosphate composition and vitamin C added such that the following formula is satisfied:
XY ≤ 50
wherein
X: the content (mg) of iron in said emulsifier-coated ferric pyrophosphate composition per 100 g of the product, and
Y: the content (mg) of vitamin C per 100 g of the product.

5. A process for producing yogurt enriched with iron, which comprises adding an emulsifier-coated ferric pyrophosphate composition to an acidified milk subjected to lactic acid fermentation.

6. A process for producing yogurt enriched with iron, which comprises separately sterilizing an emulsifier-coated ferric pyrophosphate composition and a vitamin-C-containing syrup and separately adding said pyrophosphate and said syrup to an acidified milk subjected to lactic acid fermentation.

7. A process for producing a fermented milk enriched with iron, which comprises adding an emulsifier-coated ferric pyrophosphate composition and vitamin C to an acidified milk, which has been subjected to lactic acid fermentation, such that the following formula is satisfied:
XY ≤ 50
wherein
X: the content (mg) of iron in said emulsifier-coated ferric pyrophosphate composition per 100 g of the product, and
Y: the content (mg) of vitamin C per 100 g of the product.

## Patentansprüche

1. Mit Eisen angereichertes Sauermilchprodukt, umfassend eine einer Milchsäuregärung unterworfene gesäuerte Milch und eine der gesäuerten Milch zugegebene mit Emulgator beschichtete Eisenpyrophosphatverbindung.

2. Mit Eisen angereichertes Sauermilchprodukt nach Anspruch 1, worin die mit Emulgator beschichtete Eisenpyrophosphatverbindung in einer Menge von 0,1 bis 25 mg, in Bezug auf Eisen, pro 100 g des Produkts zugegeben ist.

3. Mit Eisen angereichertes Sauermilchprodukt nach Anspruch 1 oder 2, das außerdem zugefügtes Vitamin C umfasst.

4. Mit Eisen angesäuertes Sauermilchprodukt, umfassend eine mit Emulgator beschichtete Eisenpyrophosphatverbindung und Vitamin C, so zugegeben, dass die folgende Formel erfüllt ist:
XY ≤ 50
worin bedeuten
X: Gehalt (mg) von Eisen in der mit Emulgator beschichteten Eisenpyrophosphatverbindung pro 100 g des Produkts, und
Y: Gehalt (mg) von Vitamin C pro 100 g des Produkts.

5. Verfahren zur Herstellung eines mit Eisen angereicherten Joghurt-Produkts, das umfasst: Zugeben einer mit Emulgator beschichteten Eisenpyrophosphatverbindung zu einer einer Milchsäuregärung unterworfenen gesäuerten Milch.

6. Verfahren zur Herstellung eines mit Eisen angereicherten Joghurt-Produkts, das umfasst: getrenntes Sterilisieren einer mit Emulgator beschichteten Eisenpyrophosphatverbindung und eines Vitamin C enthaltenden Sirups und getrenntes Zugeben des Pyrophosphats und des Sirups zu einer einer Milchsäuregärung unterworfenen gesäuerten Milch.

7. Verfahren zur Herstellung eines mit Eisen angereicherten Sauermilch-Produkts, das umfasst: Zugeben einer mit einem Emulgator beschichteten Eisenpyrophosphatverbindung und Vitamin C zu einer gesäuerten Milch, die einer Milchsäuregärung unterworfen wurde, in einer solchen Menge, dass die folgende Formel erfüllt wird:
XY ≤ 50
worin bedeuten
X: Gehalt (mg) von Eisen in der mit Emulgator beschichteten Eisenpyrophosphatverbindung pro 100 g des Produkts, und
Y: Gehalt (mg) von Vitamin C pro 100 g des Produkts.

## Revendications

1. Lait fermenté enrichi en fer comprenant un lait acidifié soumis à une fermentation lactique et une composition de pyrophosphate ferrique enrobé d'un émulsifiant, qui est ajoutée au dit lait acidifié.

2. Lait fermenté enrichi en fer selon la revendication 1, dans lequel la quantité ajoutée de ladite composition de pyrophosphate ferrique enrobé d'un émulsifiant varie, en termes de fer, de 1,0 à 25 mg pour 100 g de produit.

3. Lait fermenté enrichi en fer, selon la revendication 1 ou 2, comprenant en outre de la vitamine C qui lui est ajoutée.

4. Lait fermenté enrichi en fer comprenant une composition de pyrophosphate ferrique enrobé d'un émulsifiant et de la vitamine C, ajoutés de telle sorte que la formule suivante soit satisfaite :
XY ≤ 50
dans laquelle
X : la teneur (mg) en fer de ladite composition de pyrophosphate ferrique enrobé d'un émulsifiant pour 100 g de produit ; et
Y : la teneur (mg) en vitamine C pour 100 g de produit.

5. Procédé de production d'un yaourt enrichi en fer, qui comprend l'étape consistant à ajouter une composition de pyrophosphate ferrique enrobé d'un émulsifiant à un lait acidifié soumis à une fermentation lactique.

6. Procédé de production d'un yaourt enrichi en fer, qui comprend les étapes consistant à stériliser séparément une composition de pyrophosphate ferrique enrobé d'un émulsifiant et un sirop contenant de la vitamine C et à ajouter séparément ledit pyrophosphate et ledit sirop à un lait acidifié soumis à une fermentation lactique.

7. Procédé de production d'un lait fermenté enrichi en fer, qui comprend l'étape consistant à ajouter une composition de pyrophosphate ferrique enrobé d'un émulsifiant et de la vitamine C à un lait acidifié, qui a été soumis à une fermentation lactique, de telle sorte que la formule suivante soit satisfaite :
XY ≤ 50
dans laquelle
X : la teneur (mg) en fer de ladite composition de pyrophosphate ferrique enrobé d'un émulsifiant pour 100 g de produit ; et
Y : la teneur (mg) en vitamine C pour 100 g de produit.
